# EUROPEAN PATENT APPLICATION

(11) **EP 4 170 379 A1**
(43) Date of publication of application: **26.04.2023**
(21) Application number: 21204040.6
(22) Date of filing: 21.10.2021
(51) Int. Cl.: G01S 7/40, G01S 13/88, G01S 13/931, G01S 13/933, G01S 13/937, H01Q 21/06, H01Q 21/24

(54) **RADAR SCENE RECORDER AND METHOD OF GENERATING MULTIDIMENSIONAL RADAR DATA**

(71) Applicant: Rohde & Schwarz GmbH & Co. KG, 81671 München (DE)
(72) Inventor: Hamberger, Gerhard, 81671 München (DE); Brinkmann, Marius, 81671 München (DE); Beer, Matthias, 81671 München (DE)
(74) Representative: Prinz & Partner mbB

(57) **Abstract**

A radar scene recorder (14) is described. The radar scene recorder (14) comprises an antenna array and a data module. The antenna array comprises a plurality of TX antennas and a plurality of RX antennas. The antenna array is established as an at least two-dimensional (2d) MIMO array such that the plurality of TX antennas and the plurality of RX antennas are arranged in at least two dimensions. The antenna array covers a predetermined solid angle of a radar scene (18), wherein the predetermined solid angle has a predetermined azimuth angle and/or a predetermined elevation angle. The data module is configured to record and/or stream multidimensional radar data obtained by means of the antenna array, wherein the 4d data is associated with the radar scene (18). The multidimensional radar data comprises information about azimuth, elevation, frequency range, and/or Doppler shift of electromagnetic waves reflected in the radar scene (18). Further, a method of generating multidimensional radar data is described.

## Description

The invention generally relates to a radar scene recorder. The invention further relates to a method of generating multidimensional radar data.

Increasing levels of autonomy of vehicles increase the precision demands on sensor systems of the vehicles. In order to ensure their correct functionality, the sensor systems need to either be tested in real world environments by driving a significant distance, or by simulating different scenarios in vehicle-in-the-loop (ViL) systems or hardware-in-the-loop (HiL) systems.

Generating such test scenarios or rather radar data for simulating such test scenarios is a difficult task, and there is no comprehensive database available holding radar data for the vast multitude of different driving scenarios. Moreover, the radar data optimally should be suitable for different types of radar simulators and for different test applications, which may require high precision or small data rates.

Thus, the object of the present invention is to provide a radar scene recorder that is capable of providing versatile radar data.

According to the invention, the problem is solved by a radar scene recorder. The radar scene recorder comprises an antenna array and a data module. The antenna array comprises a plurality of TX antennas and a plurality of RX antennas. The antenna array is established as an at least two-dimensional (2d) MIMO array such that the plurality of TX antennas and the plurality of RX antennas are arranged in at least two dimensions. The antenna array covers a predetermined solid angle of a radar scene, wherein the predetermined solid angle has a predetermined azimuth angle and/or a predetermined elevation angle. The data module is configured to record and/or stream multidimensional radar data obtained by means of the antenna array, wherein the multidimensional radar data is associated with the radar scene. The multidimensional radar data comprises information about azimuth, elevation, frequency range, and/or Doppler shift of electromagnetic waves reflected in the radar scene.

Particularly, the multidimensional radar data comprises information about azimuth, elevation, frequency range, and Doppler shift of electromagnetic waves reflected in the radar scene.

The TX antennas and the RX antennas may be arranged on a two dimensional surface; e.g. a plane. For example, the TX antennas and the RX antennas may be arranged in lines and/or rows, particularly wherein lines or rows of TX antennas and lines or rows of TX antennas alternate.

However, the TX antennas and/or the RX antennas may also be located in different planes being parallel with respect to each other such that a three dimensional antenna array is provided. Hence, the TX and/or the RX antennas are arranged on a three dimensional surface.

By arranging the TX antennas and the RX antennas on the at least two-dimensional surface, a larger solid angle of the radar scene can be captured by means of the antennas array in both azimuth and elevation.

Particularly, the TX antennas and/or the RX antennas may be mechanically movable, e.g. arranged in a mechanically movable manner. Hence, the TX antennas and/or the RX antennas can be moved in the at least two dimensional surface, particularly within the two-dimensional plane. In addition or alternatively, the TX antennas and/or the RX antennas may be moved (laterally) out of the two-dimensional plane, thereby establishing the third dimension of the antenna array. The movement out of the two-dimensional plane corresponds to a movement perpendicular to the two-dimensional plane.

Therein and in the following, the term "radar scene" is understood to denote at least one object that reflects electromagnetic waves in an arbitrary way. Of course, the radar scene may comprise several objects. The object(s) may be stationary or may move with a certain speed in an arbitrary direction. The speed of the object(s) may be constant or may vary in an arbitrary manner.

Accordingly, the multidimensional radar data comprises precise information about reflection properties of the radar scene, namely the azimuth and elevation of the reflected electromagnetic waves, the frequency range of the reflected electromagnetic waves, and/or the Doppler shift of the reflected electromagnetic waves.

Alternatively or additionally, the multidimensional radar data may comprise information on a respective distance of the object(s) in the radar scene, particularly the distance(s) from the antenna array.

Alternatively or additionally, the multidimensional radar data may comprise information on interference signals. The interference signals may be radar signals from other radar signal sources that distort the radar scene to a certain extent.

From the azimuth angle and the elevation angle, information on the number of objects present in the radar scene and/or information on the shape(s) of the corresponding object(s) can be obtained.

The Doppler shift allows for determining speed(s) of the corresponding object(s) in the radar scene.

The information on the frequency range of the reflected electromagnetic waves is important in order to assess the compatibility of the radar data, i.e. of the multidimensional radar data, with radar simulation systems, which are usually configured to operate in a predetermined frequency range.

The predetermined azimuth angle may be at least 90°, such that the radar scene is captured by the radar scene recorder in an azimuth angle range of at least 90° with respect to a reference point, wherein the reference point may be located on the radar recorder, particularly on the antenna array.

However, the predetermined azimuth angle may also be less than 90°. For example, the predetermined azimuth angle may be between 10° and 90°. In general, multidimensional radar data obtained with smaller predetermined azimuth angles, e.g. between 10° and 20°, may be sufficient for far-range radar systems.

The predetermined elevation angle may be at least 90°, such that the radar scene is captured by the radar scene recorder in an elevation angle range of at least 90° with respect to a reference point, particularly the reference point mentioned above with respect to the azimuth angle.

The predetermined elevation angle may also be less than 90°. For example, the predetermined azimuth angle may be between 10° and 90°. In general, multidimensional radar data obtained with smaller predetermined azimuth angles, e.g. between 10° and 20°, may be sufficient for far-range radar systems.

For example, the radar scene recorder may have an azimuth angle resolution and an elevation angle resolution of less than 5°, particularly less than 3°, preferably less than 2°. Thus, the radar scene can be captured with a high angle resolution in both azimuth and elevation.

Therein and in the following, the term "angle resolution" relates to the minimum angle difference under which different targets can be distinguished from each other. Thus, a "lower" angle resolution means that different targets can be better distinguished, namely up to a smaller angle difference.

The radar scene recorder may have an angular accuracy of less than 1°, particularly less than 0.5°, for example less than 0.1°. Thus, the azimuth angle and the elevation angle of the reflected electromagnetic waves is captured with high precision.

Therein and in the following, the term "angle accuracy" may relate to the accuracy of finding a single target's location or rather azimuth and elevation. The angle accuracy may also be called "angular sampling accuracy".

The radar data, i.e. the multidimensional radar data provided by the radar recorder according to the present disclosure, comprises all information necessary for a large variety of different applications of the multidimensional radar data .

For example, the multidimensional radar data may be used for the development of radar detection algorithms, for the development of autonomous driving algorithms, for simulating radar scenes by playing back the multidimensional radar data by means of a radar simulation system, for testing radar detection algorithms and/or for testing autonomous driving algorithms.

Due to the high information content, the multidimensional radar data may need a comparably large amount of memory to store and/or a comparably large amount of computational power to process.

However, if a particular application demands a reduced size of the multidimensional radar data, the multidimensional radar data can be down-sampled in order to meet these demands, as will be described in more detail below.

The multidimensional radar data may be saved in a memory of the data module, streamed to a server, and/or streamed directly to a user-side computing device.

The radar scene recorder may be mounted onto a vehicle. Accordingly, the multidimensional radar data may be obtained while the vehicle is moving in an actual use scenario of the vehicle, such that realistic radar data is obtained. For example, the vehicle may be a car, a motorcycle, or a truck, which may be driving through traffic on a road.

Alternatively, the radar scene recorder may be stationary, e.g. if the radar scene is to be recorded from a stationary point of view.

Particularly, the radar scene recorder according to the present invention allows for recording and/or streaming the multidimensional radar data in real time.

According to an aspect of the present invention, the radar scene comprises at least one object, particularly wherein the at least one object comprises one static object or several static objects, and/or one moving object or several moving objects. The speed of the one or several moving objects may be constant or may vary in an arbitrary manner, respectively. Depending on the intended application of the multidimensional radar data, the objects may be of different type.

For example, for automotive applications, the objects may comprise moving objects such as pedestrians, bicycles, cars, trucks or motorcycles, and/or stationary objects such as guard rails, trees, traffic islands, traffic signs, parking cars etc.

For aviation applications, the objects may comprise moving objects such as planes or balloons, and/or stationary objects such as mountain crests.

For shipping applications, the objects may comprise moving objects such as ships, and/or stationary objects such as a seabed, a harbor pier, or a shore line.

According to a further aspect of the present invention, the multidimensional radar data comprises information on a shape of the at least one object. In other words, the objects are not reduced to point-like objects, but the information on the respective shape of the object(s) is still present in the multidimensional radar data. Accordingly, the object(s) in the radar scene can be simulated in a particularly accurate manner by playing back the multidimensional radar data.

In an embodiment of the present invention, the plurality of TX antennas comprises at least 25 TX antennas, particularly at least 50 TX antennas, preferably at least 90 TX antennas. Additionally or alternatively, the plurality of RX antennas comprises at least 25 RX antennas, particularly at least 50 RX antennas, preferably at least 90 RX antennas. For example, the antenna array may comprise 96 TX antennas and/or 96 RX antennas. In general, a larger number of antennas allows for covering a larger solid angle of the radar scene and/or for a better angle resolution of the radar scene recorder.

However, the plurality of TX antennas may comprise less than 25 TX antennas, for example between and including two TX antennas to 25 TX antennas.

The plurality of RX antennas may comprise less than 25 RX antennas, for example between and including two RX antennas to 25 TX antennas.

According to a further aspect of the present invention, the antenna array comprises an equal amount of TX antennas and RX antennas. Particularly, the TX antennas and the RX antennas may comprise pairs of TX and RX antennas, wherein each pair comprises one TX antenna and one RX antenna that are located close to each other, such that a monostatic antenna is approximated with sufficient accuracy by the respective antenna pair.

In a further embodiment of the present disclosure, the TX antennas are polarized in a predefined manner. Additionally or alternatively, the RX antennas may be polarized in a predefined manner. Thus, electromagnetic waves with at least one predefined polarization may be generated by means of the TX antennas, and/or received by means of the RX antennas. For example, the TX antennas and/or the RX antennas may be polarized linearly or circularly.

Therein and in the following, the term "an antenna is polarized in a predefined manner" is understood to denote that the respective antenna is configured to generate or receive electromagnetic waves that are polarized in the predefined manner.

The multidimensional radar data may comprise information on the polarization of electromagnetic waves reflected in the radar scene. Thus, the polarization information may be used to realistically simulate the radar scene when the multidimensional radar data is played back by a radar simulation system.

According to an aspect of the present invention, a predefined fraction of the TX antennas is linearly polarized in a predefined first plane, wherein the remaining fraction of the TX antennas is linearly polarized in a predefined second plane.

Alternatively or additionally, a predefined fraction of the RX antennas is linearly polarized in a predefined first plane, wherein the remaining fraction of the RX antennas is linearly polarized in a predefined second plane.

This choice of polarizations of the TX antennas and/or RX antennas may be particularly suitable for automotive applications, as automotive radar systems may comprise different subsystems that may comprise at least two differently polarized types of radar antennas, e.g. horizontally polarized, vertically polarized, +45°-polarized, and/or -45°-polarized. Thus, the at least two types of radar antennas can be tested by playing back the multidimensional radar data.

In an embodiment of the present disclosure, an angle between the predefined first plane and the predefined second plane is 90°. Many types of vehicle radar systems, particularly automotive radar systems, comprise two types of radar antennas with two different linear polarizations at an angle of 90° with respect to each other. Accordingly, the multidimensional radar data is suitable for testing both of these antenna types.

For example, the predefined first plane may be angled at +45° with respect to a reference plane, and the predefined second plane may be angled at -45° with respect to the reference plane. The reference plane may, e.g., be a horizontal plane or a vertical plane.

According to an aspect of the present invention, the antenna array is configured to transmit and receive electromagnetic waves in a frequency band between 10 and 180 GHz, for example between 70 and 82 GHz. This is typically the frequency range in which vehicle radar systems, particularly automotive radar systems, are operated currently or are likely to be operated in the future. For example, frequency bands around 140 GHz are a possible candidate for future automotive radar applications.

For example, the frequency band may be between 71 GHz and 76 GHz.

In general, the frequency band may be an arbitrary frequency band with an arbitrary bandwidth within the boundaries at 10 GHz and 180 GHz, particularly within the boundaries at 70 GHz and 80 GHz. Particularly, the frequency band may comprise a plurality of sub-bands, wherein the different sub-bands may be overlapping, complementary, or disjoint.

The multidimensional radar data may comprise samples of the azimuth, elevation, and/or Doppler shift captured by means of the antenna array at a predetermined number of frequency sample points within the frequency band. This likewise applies for frequency bands outside of the boundaries at 70 and 82 GHz mentioned above.

The frequency sample points may also be called "frequency channels".

Particularly, the frequency sample points may be evenly spread across the frequency band.

The multidimensional radar data may comprise at least 100 frequency channels, particularly at least 500 frequency channels, preferably at least 800 frequency channels.

For example, the multidimensional radar data may comprise 1000 or more frequency channels, particularly up to 9000 frequency channels.

According to a further aspect of the present invention, the antenna array is configured to transmit and receive electromagnetic waves with a bandwidth of at least 5 GHz, particularly up to 12 GHz. Thus, the obtained multidimensional radar data covers a large bandwidth such that the multidimensional radar data is suitable for a large variety of different radars simulation systems.

However, the bandwidth may also be smaller than 5 GHz. For example, the bandwidth may be between 1 GHz and 5 GHz.

In general, smaller bandwidths, e.g. between 1 GHz and 2 GHz, may be sufficient for far-range radar systems.

In a further embodiment of the present invention, the data module comprises a post-processing circuit, wherein the post-processing circuit is configured to adapt the multidimensional radar data according to predefined requirements. The predefined requirements may relate to user-specific requirements, e.g. a user wanting to test a specific frequency range. Alternatively or additionally, the predefined requirements may relate to operational requirements of a radar simulation system, e.g. an operational frequency range of a radar simulation system.

Particularly, the number of frequency channels of the multidimensional radar data may be reduced by removing certain frequency sample points from the multidimensional radar data. Therein, the number of frequency channels may be evenly reduced across the whole frequency band, e.g. by removing every second frequency channel, thereby reducing the file size of the multidimensional radar data. Alternatively or additionally, certain frequency (sub-) bands may be completely removed, e.g. if the corresponding radar simulation system is not operable in the corresponding frequency (sub-) band.

As another example, the MIMO-aperture of the antenna array, i.e. the solid angle captured by means of the antenna array, may be reduced. This way, the multidimensional radar data can be adapted to radar simulation systems that may have a smaller MIMO-aperture than the radar scene recorder or rather the antenna array. Reducing the MIMO-aperture yields a lower angular resolution and does not impact the field of view considering that the spatial Nyquist theorem is satisfied.

Particularly, the radar scene recorder is portable. This means that the radar scene recorder is established in a compact and easy to transport way. For example, the radar scene recorder may be configured such that a human can carry the radar scene recorder. As already mentioned above, the radar scene recorder may be mountable to a vehicle. As another example, the radar scene recorder may be mountable onto rails, e.g. by means of a suitable platform, such that the radar scene recorder can easily be moved on the rails.

The radar scene recorder may comprise a portable power source, such as a battery, that is configured to power the radar scene recorder for a certain time.

According to another aspect of the present invention, the multidimensional radar data is configured to be played back by means of a radar target simulator. Accordingly, the radar target simulator may generate electromagnetic waves based on the multidimensional radar data, such that the radar scene captured by the radar scene recorder is simulated by the radar target simulator.

The radar target simulator may be used in a HiL system and/or in a ViL system.

The radar scene recorder may comprise a plurality of antenna arrays that are distributed such that they cover different portions of the radar scene, particularly wherein the plurality of antenna arrays is coherent. Accordingly, a larger solid angle of the radar scene is captured by means of the plurality of antenna arrays compared to a single antenna array, such that the multidimensional radar data comprises more information about the radar scene.

For example, the radar scene recorder comprises two, three four, or five antenna arrays. However, the radar scene recorder may comprise more than five antenna arrays.

Particularly, the plurality of antennas may be mounted to a vehicle at different mounting positions, such that the complete relevant environment of the vehicle is captured by the plurality of antenna arrays.

According to the invention, the problem further is solved by a method of generating multidimensional radar data by means of a radar scene recorder described above. The method comprises the following steps:
- generating a set of electromagnetic waves by means of the TX antennas;
- receiving reflected electromagnetic waves by means of the RX antennas, wherein the reflected electromagnetic waves are reflected in the radar scene; and
- generating multidimensional radar data based on the reflected electromagnetic waves received.

The multidimensional radar data comprises information about azimuth, elevation, frequency range, and/or Doppler shift of the electromagnetic waves reflected in the radar scene.

Regarding the advantages and further properties of the method, reference is made to the explanations given above with respect to the radar scene recorder, which also hold for the method and vice versa.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a radar scene with a radar recorder according to the present invention;
- Figure 2 schematically shows a block diagram of the radar recorder of Figure 1;
- Figure 3 schematically shows a flow chart of a method for recording multidimensional radar data; and
- Figure 4 schematically shows a radar scene with a radar recorder according to a further embodiment of the present disclosure.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

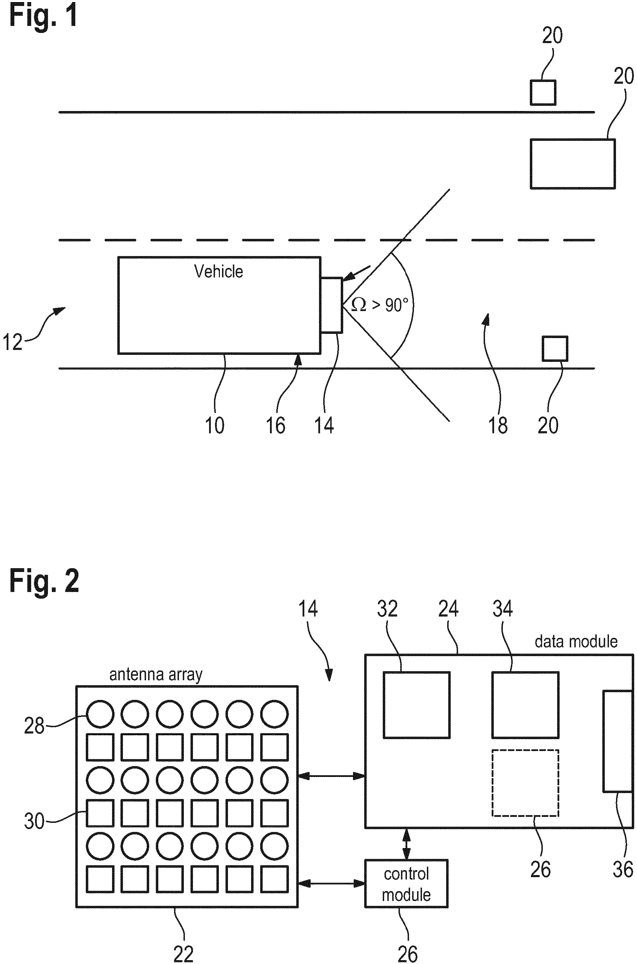

Figure 1 schematically shows a vehicle 10 driving on a road 12. In general, the vehicle 10 may be any type of vehicle, for example a car, a motorcycle, or a truck.

A radar scene recorder 14 is mounted to the vehicle 10 in a front region 16 of the vehicle 10, such that the radar scene recorder 14 captures a predetermined solid angle Ω of a radar scene 18 in front of the vehicle 10.

The radar scene recorder 14 may be power by a power supply system of the vehicle 10. Alternatively, the radar scene recorder may comprise a power supply, such as a battery.

The radar scene 18 comprises several objects 20 of different shapes and sizes, wherein some of the objects 20 may be stationary while other ones of the objects 20 may be moving with a certain velocity and/or a certain acceleration.

Without restriction of generality, the functionality of the radar scene recorder 14 is described in the following with reference to the automotive application shown in Figure 1.

However, it is to be understood that the radar scene recorder 14 can readily be adapted for other applications, such as aviation applications or shipping applications.

The objects 20 may comprise moving objects such as pedestrians, bicycles, cars, trucks or motorcycles, and/or stationary objects such as guard rails, trees, traffic islands, traffic signs, etc.

In other words, the vehicle 10 may be driving in a common traffic scenario, e.g. in a city or on a highway.

Figure 2 shows the radar scene recorder 14 in more detail. The radar scene recorder 14 comprises an antenna array 22, a data module 24, and a control module 26, which are connected with each other in a signal transmitting manner.

The data module 24 and the control module 26 are established separately in the embodiment shown in Figure 2. However, the data module 24 and the control module 26 could also be integrated into a single module, as indicated by the dashed lines in Figure 2.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

Moreover, the term "connected in a signal transmitting manner" is understood to denote a cable-based or wireless connection that is configured to transmit signals between the respective devices or components.

In the shown embodiment, the antenna array 22 is established as a two dimensional MIMO array. Thus, the antenna array comprises a plurality of TX antennas 28, i.e. antennas that are configured to transmit electromagnetic waves, and a plurality of RX antennas 30, i.e. antennas that are configured to receive electromagnetic waves.

In the embodiment illustrated in Figure 2, the TX antennas 28 and the RX antennas 30 are arranged in a common plane, wherein the TX antennas 28 and the RX antennas 30 are arranged in rows, such that full rows of TX antennas 28 alternate with full rows of RX antennas 30.

However, the TX antennas 28 and the RX antennas may be arranged in any other suitable pattern on a two dimensional surface.

In general, the number of TX antennas 28 and RX antennas 30 determines the field of view of the antenna array, i.e. the solid angle Ω captured by the antenna array 22, and/or the angle resolution of the antenna array 22.

The antenna array 22 may comprise at least 25 TX antennas 28 and 25 RX antennas 30, particularly at least 50 TX antennas 28 and 50 RX antennas 30.

Preferably, the antenna array 22 comprises at least 90 TX antennas 28 and 90 RX antennas 30.

For example, the antenna array may comprise 96 TX antennas 28 and 96 RX antennas 30.

However, the plurality of TX antennas 28 may comprise less than 25 TX antennas 28, for example between and including two TX antennas 28 to 25 TX antennas 28. The plurality of RX antennas 30 may comprise less than 25 RX antennas 30, for example between and including two RX antennas 30 to 25 TX antennas 30.

Preferably, the field of view of the antenna array 22, i.e. the solid angle Ω has an azimuth angle of at least 90° and an elevation angle of at least 90°.

Thus, the radar scene 18 is captured by the radar scene recorder 14 in an azimuth angle range of at least 90° and in an elevation angle range of at least 90°.

The elevation angle range and/or the azimuth angle range may also be less than 90°. For example, the elevation angle range and/or the azimuth angle range may be between 10° and 90°.

The radar scene recorder 14 may have an azimuth angle resolution and an elevation angle resolution of less than 5°, particularly less than 3°, preferably less than 2°. Thus, the radar scene can be captured with a high angle resolution in both azimuth and elevation.

Therein and in the following, the term "angle resolution" relates to the minimum angle difference under which different targets can be distinguished from each other. Thus, a "lower" angle resolution means that different targets can be better distinguished, namely up to a smaller angle difference.

The radar scene recorder may have an angular accuracy of less than 1°, particularly less than 0.5°, for example less than 0.1°. Thus, the azimuth angle and the elevation angle of electromagnetic waves incident on the antenna array 22 can be determined with high precision.

Therein and in the following, the term "angle accuracy" may relate to the accuracy of finding a single target's location or rather azimuth and elevation. The angle accuracy may also be called "angular sampling accuracy".

On the other hand, the azimuth angle and the elevation angle of electromagnetic waves generated by means of the antenna array 22 can be controlled with high precision.

A predefined fraction of the TX antennas 28 is linearly polarized in a predefined first plane, and the remaining fraction of the TX antennas 28 is linearly polarized in a predefined second plane, such that an angle between the predefined first plane and the predefined second plane is 90°.

Alternatively or additionally, a predefined fraction of the RX antennas 30 is linearly polarized in a predefined first plane, and the remaining fraction of the RX antennas 30 is linearly polarized in a predefined second plane, such that an angle between the predefined first plane and the predefined second plane is 90°.

In a particular example, 94 of the TX antennas 28 may have a polarization direction in the predefined first plane, and two of the TX antennas 28 may have a polarization direction in the predefined second plane, or vice versa. Likewise, 94 of the RX antennas 30 may have a polarization direction in the predefined first plane, while two of the RX antennas 30 may have a polarization direction in the predefined second plane.

For example, the predefined first plane may be angled at +45° with respect to a reference plane, and the predefined second plane may be angled at -45° with respect to the reference plane.

The reference plane may e.g. be a horizontal plan, i.e. a plane that is parallel to the road 12. Alternatively, the reference plane may be a vertical plane, i.e. a plane that is perpendicular to the road 12.

In general, the antenna array 22 is configured to transmit and receive electromagnetic waves in one or several predetermined frequency bands.

One possible operating range for automotive radar systems is the frequency band between 70 GHz and 82 GHz. Accordingly, the antenna array 22 may be operable between 70 GHz and 82 GHz and may have a bandwidth of up to 12 GHz, as will be described in more detail below.

However, any other suitable frequency bands may be used and the explanations given in the following likewise apply to these other frequency bands. Without restriction of generality, the exemplary frequency band between 70 GHz and 82 GHz is described in the following.

The data module 24 comprises a memory 32, a processing circuit 33, a post-processing circuit 34, and a streaming interface 36.

The functionality of the data module 24 and of its components is described in more detail below.

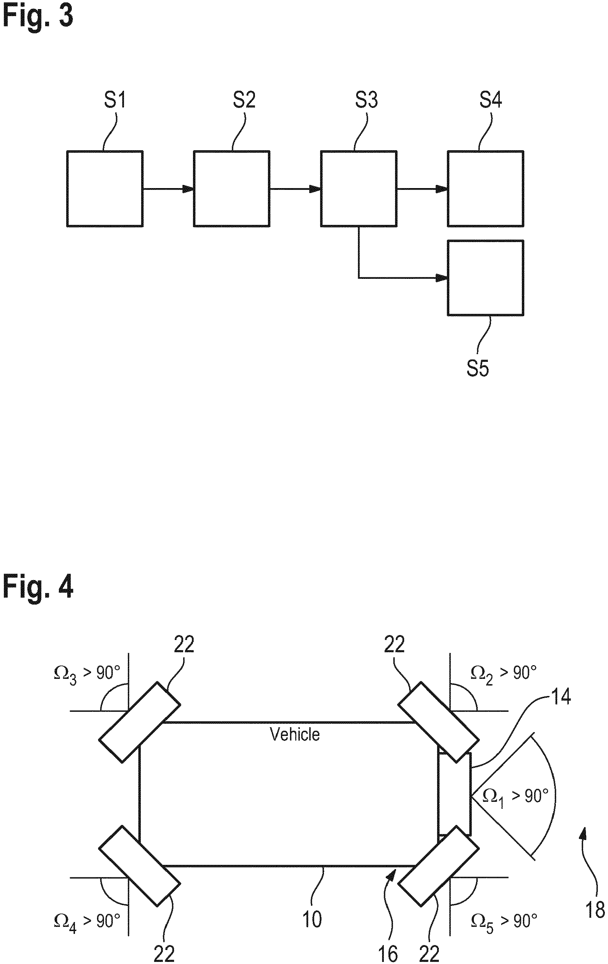

The control module 26 is configured to cause the radar scene recorder 14 to perform the following steps of a method of generating multidimensional radar data, which are described in the following with reference to Figure 3.

A set of electromagnetic waves is generated by means of the antenna array 22, more precisely by means of the TX antennas 28 (step S1).

The set of electromagnetic waves is configured such that the predefined solid angle Ω is completely covered by the set of electromagnetic waves.

The set of electromagnetic waves generally comprises a plurality of electromagnetic waves at different frequencies, which will in the following be called "frequency channels".

The set of electromagnetic waves may comprise at least 100 frequency channels, particularly at least 500 frequency channels, preferably at least 800 frequency channels.

For example, the set of electromagnetic signals may comprise 1000 or more frequency channels, particularly up to 9000 frequency channels or even more.

The frequency channels may be evenly spaced across the frequency band covered by the antenna array 22, i.e. across the frequency spectrum ranging from 70 GHz to 82 GHz.

The electromagnetic waves are reflected by the objects 20 in the radar scene 18, such that the electromagnetic waves are at least partially reflected back to the antenna array 22.

The reflected electromagnetic waves are received by means of the antenna array 22, more precisely by means of the RX antennas 30 (step S2).

The received electromagnetic waves or rather electric signals corresponding to the received electromagnetic waves are processed by means of the processing circuit 33, thereby generating multidimensional radar data associated with the received electromagnetic waves (step S3).

In general, the multidimensional radar data comprises information about azimuth, elevation, frequency range, and/or Doppler shift of the received electromagnetic waves.

The multidimensional radar data may comprise information on a respective distance of the object(s) 20 in the radar scene 18, particularly the distance(s) from the antenna array 22.

Alternatively or additionally, the multidimensional radar data may comprise information on interference signals. The interference signals may be radar signals from other radar signal sources that distort the radar scene 18 to a certain extent.

Optionally, the multidimensional radar data may further comprise information about the polarization of the received electromagnetic waves.

Thus, the multidimensional radar data comprises precise information about reflection properties of the radar scene 18, namely the azimuth and elevation of the reflected electromagnetic waves, the frequency range of the reflected electromagnetic waves, and/or the Doppler shift of the reflected electromagnetic waves.

From the azimuth angle and the elevation angle, information on the number of objects 20 present in the radar scene 18 and/or information on the shape(s) of the corresponding object(s) 20 can be obtained.

The information on the frequency range may comprise information on the number of frequency channels of the electromagnetic waves received, and the overall bandwidth of the electromagnetic waves.

The information on the Doppler shift allows for determining speed(s) of the corresponding object(s) 20 in the radar scene 18.

The obtained multidimensional radar data may be saved in the memory 32 and/or may be streamed to another device by means of the streaming interface 36 (step S4).

For example, the multidimensional radar data may be transferred to a server or to a user-side computing device. The multidimensional radar data may then be saved in a corresponding memory of the server or of the user-side computing device.

The multidimensional radar data may be used in a plurality of different ways. For example, the multidimensional radar data may be used for the development of radar detection algorithms, the development of autonomous driving algorithms, and/or for simulating radar scenes by playing back the multidimensional radar data by means of a radar simulation system.

Alternatively or additionally, the multidimensional radar data may be post-processed or rather down-sampled by means of the post-processing circuit 34 (step S5).

This way, the multidimensional radar data can be adapted to meet the requirements of particular applications, such as the development of radar detection algorithms, the development of autonomous driving algorithms, and/or simulating radar scenes by means of a radar simulation system.

For example, the number of frequency channels of the multidimensional radar data may be reduced by removing certain frequency sample points, i.e. frequency channels from the multidimensional radar data.

The number of frequency channels may be evenly reduced across the whole frequency band, e.g. by removing every second frequency channel, thereby reducing the file size of the multidimensional radar data.

Alternatively or additionally, certain frequency (sub-) bands may be completely removed, e.g. if the corresponding radar simulation system is not operable in the corresponding frequency (sub-) band.

As another example, the MIMO-aperture of the antenna array 22, i.e. the solid angle Ω captured by means of the antenna array 22, may be reduced. This way, the multidimensional radar data can be adapted to radar simulation systems that may have a smaller MIMO-aperture than the radar scene recorder 14 or rather a smaller MIMO-aperture than the antenna array 22.

Thus, the multidimensional radar data provided by the method described above is highly versatile and can be used for a multitude of different applications.

Figure 4 schematically shows the vehicle of Figure 1. However, the radar scene recorder 14 comprises multiple antenna arrays 22 that are distributed around the vehicle 10, such that different solid angles Ω₁ to Ω₅ of the radar scene 18 are covered by means of the antenna arrays 22.

The antenna arrays 22 may all be connected to the same control module 26 and/or to the same data module 24.

Preferably, the antenna arrays 22 are coherent, such that phase relations between the different antenna arrays 22 are known.

The remaining explanations given above also apply to the embodiment shown in Figure 4, wherein the multidimensional radar data obtained by the radar scene recorder according to Figure 4 comprises information about the solid angles Ω₁ to Ω₅ covered by the antenna arrays 22.

Certain embodiments disclosed herein, particularly the respective module(s) and unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A radar scene recorder, comprising an antenna array (22) and a data module (24),
wherein the antenna array (22) comprises a plurality of TX antennas (28) and a plurality of RX antennas (30),
wherein the antenna array (22) is established as an at least two-dimensional (2d) MIMO array such that the plurality of TX antennas (28) and the plurality of RX antennas (30) are arranged in at least two dimensions, and wherein the antenna array (22) covers a predetermined solid angle of a radar scene (18), wherein the predetermined solid angle has a predetermined azimuth angle and/or a predetermined elevation angle,
wherein the data module (24) is configured to record and/or stream multidimensional radar data obtained by means of the antenna array (22), wherein the multidimensional radar data is associated with the radar scene (18), and
wherein the multidimensional radar data comprises information about azimuth, elevation, frequency range, and/or Doppler shift of electromagnetic waves reflected in the radar scene (18).

2. The radar scene recorder of claim 1, wherein the radar scene (18) comprises at least one object (20), particularly wherein the at least one object (20) comprises one static object or several static objects, and/or one moving object or several moving objects.

3. The radar scene recorder of claim 2, wherein the multidimensional radar data comprises information on a shape of the at least one object (20).

4. The radar scene recorder according to any one of the preceding claims, wherein the plurality of TX antennas (28) comprises at least 25 TX antennas (28), particularly at least 50 TX antennas (28), preferably at least 90 TX antennas (28), and/or wherein the plurality of RX antennas (30) comprises at least 25 RX antennas (30), particularly at least 50 RX antennas (30), preferably at least 90 RX antennas (30).

5. The radar scene recorder according to any one of the preceding claims, wherein the antenna array (22) comprises an equal amount of TX antennas (28) and RX antennas (30).

6. The radar scene recorder according to any one of the preceding claims, wherein the TX antennas (28) are polarized in a predefined manner and/or wherein the RX antennas (30) are polarized in a predefined manner.

7. The radar scene recorder according to claim 6, wherein the multidimensional radar data comprises information on the polarization of electromagnetic waves reflected in the radar scene (18).

8. The radar scene recorder according to any one of the preceding claims, wherein a predefined fraction of the TX antennas (28) is linearly polarized in a predefined first plane, and wherein the remaining fraction of the TX antennas (28) is linearly polarized in a predefined second plane, and/or
wherein a predefined fraction of the RX antennas (30) is linearly polarized in a predefined first plane, and wherein the remaining fraction of the RX antennas (30) is linearly polarized in a predefined second plane.

9. The radar scene recorder according to claim 8, wherein an angle between the predefined first plane and the predefined second plane is 90°.

10. The radar scene recorder according to any one of the preceding claims, wherein the antenna array (22) is configured to transmit and receive electromagnetic waves in a frequency band between 10 and 180 GHz, for example between 70 and 82 GHz, particularly wherein the antenna array (22) is configured to transmit and receive electromagnetic waves with a bandwidth of at least 5 GHz, particularly up to 12 GHz.

11. The radar scene recorder according to any one of the preceding claims, wherein the data module (24) comprises a post-processing circuit (34), wherein the post-processing circuit (34) is configured to adapt the multidimensional radar data according to predefined requirements.

12. The radar scene recorder according to any one of the preceding claims, wherein the radar scene recorder (14) is portable.

13. The radar scene recorder according to any one of the preceding claims, wherein the multidimensional radar data is configured to be played back by means of a radar target simulator.

14. The radar scene recorder according to any one of the preceding claims, wherein the radar scene recorder (14) comprises a plurality of antenna arrays (22) that are distributed such that they cover different portions of the radar scene (18), particularly wherein the plurality of antenna arrays (22) is coherent.

15. A method of generating multidimensional radar data by means of a radar scene recorder (14) according to any one of the preceding claims, the method comprising the following steps:
- generating a set of electromagnetic waves by means of the TX antennas (28);
- receiving reflected electromagnetic waves by means of the RX antennas (30), wherein the reflected electromagnetic waves are reflected in the radar scene (18); and
- generating multidimensional radar data based on the reflected electromagnetic waves received;
wherein the multidimensional radar data comprises information about azimuth, elevation, frequency range, and/or Doppler shift of the electromagnetic waves reflected in the radar scene.
